## Europäisches Patentamt

## European Patent Office

## Office européen des brevets

(11) Publication number: **0 206 660**
**B1**

(12) **EUROPEAN PATENT SPECIFICATION**

(45) Date of publication of patent specification: **16.01.91**

(21) Application number: **86304511.8**

(22) Date of filing: **12.06.86**

(51) Int. Cl.⁵: **B 63 B 27/22**

(54) Articulated boom mechanism for unloading bulk solid material from a ship.

(30) Priority: **14.06.85 CA 484002**
**09.05.86 US 861680**

(43) Date of publication of application:
**30.12.86 Bulletin 86/52**

(45) Publication of the grant of the patent:
**16.01.91 Bulletin 91/03**

(84) Designated Contracting States:
**AT BE CH DE FR GB IT LI LU NL SE**

(56) References cited:
**DD-A- 47 489**
**DD-A- 72 699**
**DD-A- 80 631**

(73) Proprietor: **THE CSL Group Inc.**
**759 Victoria Square**
**Montreal Quebec H2Y 2K3 (CA)**

(72) Inventor: **Johnston, William Hervé**
**17 Franklin Avenue Ville de Mont Royal**
**Québec H3P 1B8 (CA)**

(74) Representative: **Huntingford, David Ian et al**
**Geoffrey Owen & Company 76 Lower Bridge**
**Street**
**Chester CH1 1RU (GB)**

EP 0 206 660 B1

Courier Press, Leamington Spa, England.

## Description

This invention relates to a boom for unloading bulk solid material from, for example, a ship, and more particularly, to a boom with an articulated construction.

Ships at present generally utilize a single boom of unitary construction for unloading bulk solid material. Such a boom has its one end pivoted to the deck of the ship with its outer end being free to move through a generally semi-circular path. The elevation of the outer end of the boom may also be adjusted such that an angle of up to fifteen degrees is formed between the boom and the deck of the ship. A conveyor system extends through the boom such that bulk solid material emptied from the hold or holds of the ship onto the one end of the boom is transported along the boom and emptied from the other end of the boom.

Such a construction is shown for example in DD-A-72699.

The difficulty that has been encountered with the use of a single span boom for unloading bulk solid material from a ship relates to the time and effort required in positioning the ship such that the outer end of the boom achieves a desired position. When extending over the side of the ship, the outer end of the boom describes an arc which varies in its displacement from the ship with its distance along the ship. In some cases the outer end of the boom extends to such a great distance beyond the side of the ship during the unloading operation that a second ship must be interposed between the ship and the material receiving site to stabilize the position of the ship.

It is an object of the present invention to provide an articulated boom mechanism which provides the capability of significantly improved performance compared with the known single boom arrangement described above.

According to the present invention there is provided an articulated boom mechanism for use in conveying bulk solid material, such as bulk solid material capable of being carried by a ship, the boom mechanism comprising: a first boom construction one end of the first boom construction being adapted to be pivotally mounted to a support base, such as a portion of a ship's structure, by a universal-type connection, the first boom construction having a first conveyor means extending through it for transporting material from one of its ends to the other of its ends; first actuator means adapted to extend between the support base and the first boom construction for selectively varying the relative vertical angle between the first boom construction and the support base; first powered pivot means for rotating the first boom construction relative to the support base through desired horizontal angles; characterized by an articulation member, comprising first and second portions which are relatively rotatable about an axis of relative rotation, the first portion being pivotally mounted to the other end of the first boom construction; a second boom construction, one end of the second boom construction being pivotally mounted to the second portion of the articulation member, the second boom construction having a second conveyor means extending through it for transporting bulk solid material from one of its ends to the other of its ends; second actuator means extending between the articulation member and the second boom, construction for selectively varying the relative vertical angle between the articulation member and the second boom construction; further actuator means for maintaining the axis of relative rotation defined by the articulation member at a substantially fixed upright orientation relative to the support base for all angular positions assumed by the first boom construction relative to the support base; second powered pivot means for rotating the second portion of the articulation member and the second boom construction mounted thereto relative to the first portion of the articulation member about said axis of relative rotation through desired horizontal angles; whereby bulk solid material placed onto one of the conveyor means is subsequently discharged from the other conveyor means after moving through a path determined by the first and second actuator means and the first and second pivot means.

The articulation member may be a tube adapted in use to have its symmetry axis extending generally vertically, the tube in use having an upper portion defining the one portion of the articulation member and a lower portion defining the other portion of the articulation member. The upper and lower portions of the tube are connected by an annular bearing extending therebetween. The other end of the first conveyor means is adapted to extend into the upper portion of the tube and the one end of the second conveyor means is adapted to extend into the lower portion of the tube. In such arrangement, bulk solid material falls from the other end of the one conveyor means through the tube onto the one end of the second conveyor means. A first part of the annular bearing may be formed on the lower edge of the upper portion of the tube with a second part of the annular bearing formed on the upper edge of the lower portion of the tube. In such arrangement, the one of the first and second parts of the annular bearing has first gear teeth extending along its periphery, and the other of the first and second parts of the annular bearing has a series of motors mounted on its periphery with each motor driving a set of gear teeth adapted to engage the first gear teeth.

The articulated boom mechanism may also comprise a chute adapted to be mounted within the articulation member. The chute is adapted to be mounted to the upper portion of the tube and to extend generally centrally through the tube. The upper end of the chute is positioned in use under an outer end of the first conveyor means, that outer end being positioned proximate of the other end of the first boom construction. The lower end of the chute is positioned in use above an inner end of the second conveyor means, that inner end being positioned proximate of the one end of the second boom construction. When the articulated boom construction is in use, the chute guides bulk solid material leaving the first conveyor means onto the second conveyor means.

The first boom construction may comprise a first boom member and a shaft means, the shaft means being adapted to be mounted on the support base e.g. the structure of a ship, to rotate normal to support base i.e. the deck of the ship. In such an arrangement the first boom member is adapted to be pivotally mounted on the shaft means by an axle extending parallel to the deck of the ship. The first boom member may be a tube of circular cross-section. The second boom construction may comprise a second boom member, that second boom member being a tube of rectangular cross-section. In such arrangement, the first pivot means may comprise hydraulic actuator means, rack means and pinion means. A stationary portion of the hydraulic actuator means is adapted to be mounted to the structure of the ship, the pinion means is adapted to extend along the periphery of the shaft means, and the rack means is adapted to connect to a movable portion of the hydraulic actuator means and to engage the pinion means. The first boom member may be of sufficiently greater length than the second boom construction that is in use. In one orientation of the articulated boom mechanism, the second boom construction is capable of extending completely under the first boom member.

The first actuator means may be adapted to extend between the structure of the ship and the first boom construction and the second actuator means may be adapted to extend between the first boom construction and the articulation member. During use of the articulated boom mechanism, actuation of the first actuator means results in a corresponding actuation of the further actuator means for maintaining the articulation member at the fixed orientation relative to the structure of the ship.

The first end of the first conveyor means may be defined by a roller having a rotational axis adapted to extend generally concentrically with the axis of the pivotal mounting around which the articulation member pivots relative to the first boom construction. The lower end of the chute is adapted to be positioned proximate of the axis of the pivotal mounting around which the second boom construction pivots relative to the articulation member.

It will be appreciated that the articulated boom mechanism of the present invention provides improvements over a single span boom on the bulk solid material unloading operation in at least two significant ways. Firstly, a ship utilizing the articulated boom mechanism can assume a greater variety of docking positions without consideration having to be given to the effect of such docking positions on the material unloading position of the boom. Secondly, once the ship has been docked the outer end of the articulated boom mechanism may be oriented to assume any selected displacement from the ship at any selected distance along the ship. The time taken to initiate reclaiming of the bulk solid material from the ship is significantly reduced, and the sometime requirement for interposing of a second ship for stabilizing the unloading operation is eliminated. A further benefit of the articulated boom mechanism is that it allows bulk solid material to be transferred from one ship to a second ship when the two ships are positioned so as to have abutting sides; with the single span unloading boom such transfers were not generally possible.

The invention is described further hereinafter, by way of example only, with reference to the accompanying drawings, in which:-

Figure 1 is a side view of a ship having a preferred embodiment of an articulated boom mechanism in accordance with this invention extending on its deck;

Figure 2 is a perspective view of that end of the preferred embodiment of the articulated boom mechanism that is mounted to the structure of the ship;

Figure 3 is a side view of that end of the preferred embodiment of the articulated boom mechanism that is mounted to the structure of the ship, the view also illustrating an over-hanging structure through which material is conveyed from the hold or holds of the ship;

Figure 4 is a side view of the articulation member of the preferred embodiment of the articulated boom mechanism, the articulation member having first and second boom members pivotally connected to it;

Figure 5 is a sectional side view of the articulation member and first and second boom members of Figure 4;

Figure 6 is an enlarged view of that portion of Figure 5 relating to the annular bearing that is secured between the upper and lower portions of the articulation member;

Figure 7 is a sectional perspective view of the annular bearing that is secured between the upper and lower portions of the articulation member; and

Figure 8 is a diametrical cross-sectional view of the first boom member of the preferred embodiment of the articulated boom mechanism.

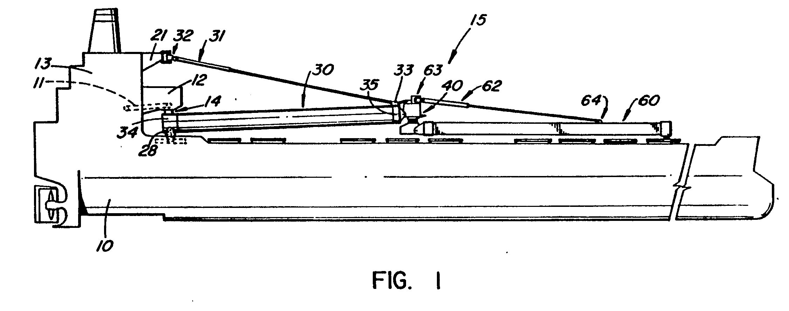

With reference to Figure 1, ship 10 has a series of holds extending serially along its length, each hold being capable of holding a portion of a bulk solid material cargo. A series of belts terminating in belt 11, illustrated in outline in Figure 1, transports bulk solid material from the holds to overhang structure 12, that structure extending forward of the raised superstructure 13 at the rear of ship 10. The bulk solid material is emptied from belt 11 as that belt moves within overhang structure 12 and falls through a flexible cylindrical hood 14 into the base of the articulated boom mechanism, that mechanism being generally designated 15.

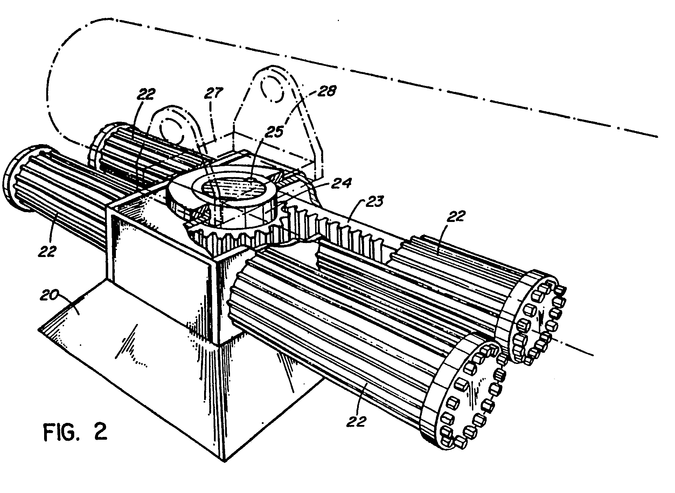

Articulated boom mechanism 15 is supported on ship 10 by a base structure 20 mounted on the deck of ship 10 and by an overhang member 21 extending forward of raised superstructure 13 and above overhang structure 12. With reference to Figure 2, base structure 20 has a sloped lower portion and a generally rectangular upper portion, with a pair of hydraulic piston chambers 22 extending from each of an opposite pair of sides of the rectangular upper portion. Each facing pair of hydraulic piston chambers 22 contains a piston (not shown) connected to an opposite end of a common rack member 23, hydraulic fluid entering one of the facing pair of chambers 22 moving the rack member 23 in one direction while hydraulic fluid is being expelled to a reservoir from the other one of the chambers. The hydraulic fluid is forced simultaneously into a diagonally-opposite pair of the chambers 22 such that the pair of rack -members 23 move simultaneously an equal distance but in opposed directions. Centered between the pair of rack members 23 is a pinion member 24 having teeth on its periphery which engage the teeth of the pair of rack members 23. Pinion member 24 is mounted on bearings for free rotation and has a spline groove 25 machined into its inner periphery. A turret member 27 with an integral splined shaft is mounted on pinion member 24 such that its spline sits in spline groove 25. A pair of trunnions 28 are integral with turret member 27 and extend from an opposite pair of sides of turret member 27. The chambers 22, rack 23, pinion member 24 and trunnion 28 form first powered pivot means.

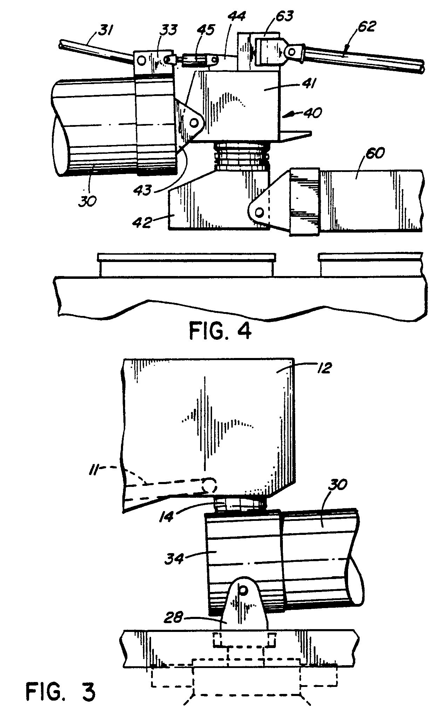

Mounted to rotate in the pair of trunnions 28 is a first boom member 30, its one end being pivotally mounted to the pair of trunnions 28 and its other end being connected by first actuator means in the form of hydraulic actuator mechanism 31 to overhang member 21. The supporting connection between hydraulic actuator mechanism 31 and overhang member 21 is by means of a universal joint 32 such that rotation is possible around an axis normal to the deck of the ship and one parallel to the deck. Axle assembly 32 allows hydraulic actuator mechanism 31 to rotate with first boom member 30. As best shown in Figure 4, hydraulic actuator mechanism 31 is pivotally connected to the outer end of first boom member 30 by a flange 33 extending from that outer end.

First boom member 30 is a circular tube having a diameter of 10.5 feet (3.20 metres). The tube is formed of steel and has 0.375 inch (0.95 cm) thick walls. Circular reinforcing hoops of rectangular cross-section (not shown) are secured to the outside of the circular tube approximately every 10 feet (3.04 metres) along the length of the tube; the reinforcing hoops resist torsional stress placed onto first boom member 30. Thick steel bands 34 and 35 are placed over the respective inner and outer ends of the circular tube of first boom member 30 to distribute over the tube the load exerted by the pair of trunnions 28 and hydraulic actuator mechanism 31. In the illustrated preferred embodiment, first boom member 30 is approximately 130 feet (39.62 metres) in length.

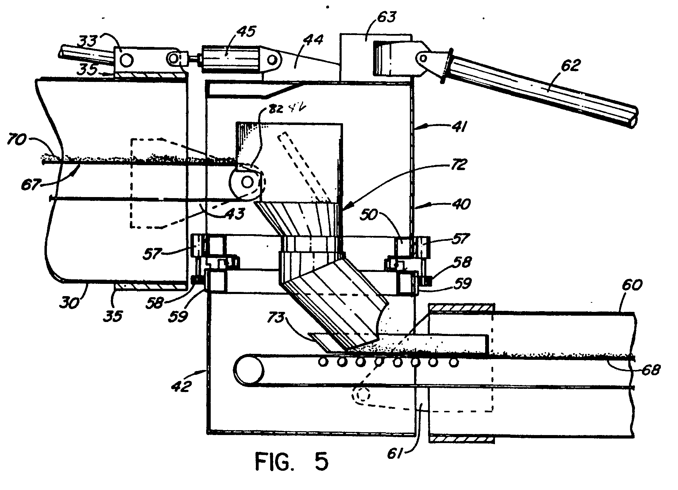

An articulation member 40, as best shown in Figures 4 and 5, has an upper portion 41 and a lower portion 42 pivotally connected to upper portion 41. Articulation member 40 is itself pivotally connected to the outer end of first boom member 30 by a pair of trunnions 43. A flange 44 secured to the top of articulation member 40 is connected by further actuator means in the form of hydraulic actuator mechanism 45, to the flange 33 on first boom member 30. Hydraulic actuator mechanisms 31 and 45 have a complementary hydraulic connection such that an extension or contraction of hydraulic actuator mechanism 31 results in a corresponding contraction or expansion of hydraulic actuator mechanism 45, the effect being that articulation member 40 maintains a constant orientation relative to the deck of the ship for all angular positions of first boom member 30; the orientation is one in which the axis of rotation between the upper portion 41 and the lower portion 42 of articulation member 40 extends normal to the deck of the ship.

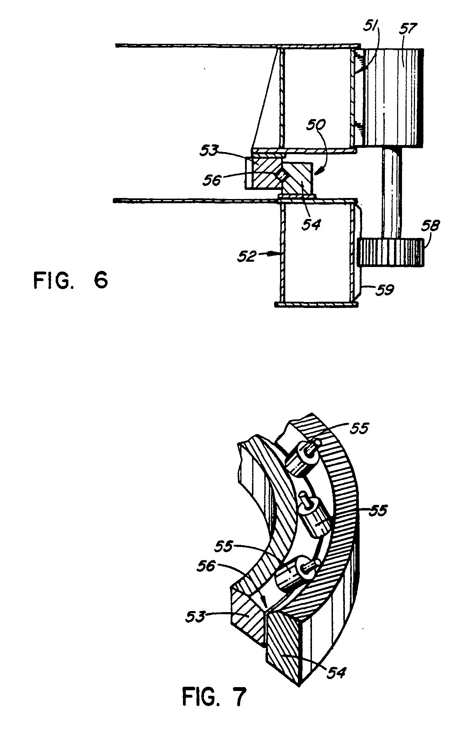

Articulation member 40 in plan view is circular in cross-section, the lower portion 42 being rotatable relative to the upper portion 41 by means of an annular bearing generally designated 50. Annular bearing 50 is of the type found on large cranes and is capable of carrying very heavy loading forces while still allowing the two portions of articulation member 40 to rotate relative to each other. Figure 6 illustrates annular bearing 50 in an enlarged sectioned side view, while Figure 7 illustrates a perspective sectioned view of the bearing. An upper annular frame 51 of rectangular cross-section and a corresponding lower annular frame 52 are secured to respective upper and lower complementary bearing members 53 and 54, as shown in Figure 6. A series of rollers 55 each of which has its axis of rotation oriented normal to the axis of rotation of its immediately-adjacent neighbours extends in a diamond-shaped race 56 defined by the facing surfaces of bearing members 53 and 54.

As illustrated in Figures 5 and 6, a series of motors 57 are mounted to the periphery of upper annular frame 51. Each motor has a gear wheel 58 secured to its rotor, the series of gear wheels 58 having teeth that engage with complementary teeth on a ring gear 59 that extends around the periphery of lower annular frame 52. This arrangement (50, 57, 58, 59) forms second powered pivot means. The motors 57 are electrically connected such that all are actuated simultaneously; such actuation results in the lower portion 42 of articulation member 40 and a connected second boom member 60 rotating relative to the upper portion 41 of articulation member 40.

The second boom member 60 has its inner end pivotally mounted by a pair of trunnions 61 to the lower portion 42 of articulation member 40, as shown in Figure 1. Second boom member 60 is of rectangular cross-section and is formed from steel plate 0.375 inch (0.95 cm) thick. Member 60 of the preferred embodiment is approximately 90 feet (27.43 metres) long, and is 10.5 feet (3.20 metres) wide and 6.5 feet (1.98 metres) high. As with first boom member 30, second boom member 60 has hoops of rectangular cross-section (not shown) secured around its periphery at intervals of approximately 10 feet (3.04 metres) to assist in resisting torsional stresses. Second actuator means in the form of a hydraulic actuator mechanism 62, are connected between a flange 63 extending from articulation member 40 and a flange 64 secured to second boom member 60. Similar to the arrangement with hydraulic actuator mechanism 31, hydraulic actuator mechanism 62 has its one end mounted through a universal joint to flange 63 so as to allow it to rotate with the lower portion 42 of articulation member 40 and with second boom member 60.

A first conveyor belt 67 is mounted to extend centrally through first boom member 30, and a second conveyor belts 68 is mounted to extend centerally through second boom member 60, as illustrated in Figure 5. One of the two end rollers 82 around which belt 67 extends is mounted so as to have its axis of rotation extending generally concentrically with the pivot axis around which articulation member 60 rotates relative to first boom member 30. This arrangement allows bulk solid material 70 being carried on belt 67 to consistently fall onto the inner surface of a chute 72 secured to the upper portion 41 of articulation member 40. The material 70 is guided by chute 72 and empties onto belt 68 of second boom member 60, guide surfaces 73 secured to member 60 preventing material from falling from the sides of belt 68. The lower lip of chute 72 sits above belt 68 approximately above the axis through which second boom member 60 is pivoted to the lower portion 42 of articulation member 40. That arrangement allows the lower lip of chute 72 to maintain its small spacing from belt 68 over all relative angular orientations between second boom member 60 and articulation member 40.

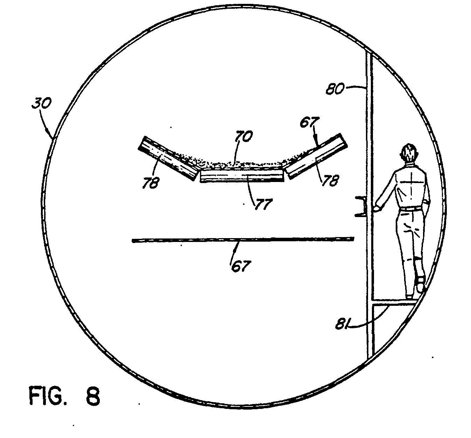

Figure 8 illustrates a diametrical cross-sectional view of first boom member 30. Belt 67 can be seen to be supported by three rollers, a horizontal central roller 77 and an adjacent pair of inclined side rollers 78. Near either end of first boom member 30, the side rollers 78 assume a horizontal orientation with central roller 77, as illustrated in Figure 5; a similar situation is true with respect to boom member 60. As seen in Figure 8, a walkway for personnel is formed by a vertical structural element 80 and a connecting horizontal floor surface 81.

The position of the outer end of second boom member 60, from which bulk solid material leaves the articulated boom mechanism, is positioned by selective actuation of hydraulic actuator mechanisms 31 and 62, selective delivery of hydraulic fluid to a diagonally opposed pair of chambers 22, and selective actuation of the motors 57. It will be appreciated that the articulated boom mechanism of this invention will allow a ship to be emptied both faster and more easily than is possible with a single span unloading boom.

## Claims

1. An articulated boom mechanism for use in conveying bulk solid material, such as bulk solid material capable of being carried by a ship, the boom mechanism comprising:

(a) a first boom construction (30) one end of the first boom construction being adapted to be pivotally mounted to a support base, such as a portion of a ship's structure, by a universal-type connection, the first boom construction having a first conveyor means (67) extending through it for transporting material from one of its ends to the other of its ends;

(b) first actuator means (31) adapted to extend between the support base and the first boom construction (30) for selectively varying the relative vertical angle between the first boom construction (30) and the support base;

(c) first powered pivot means (22, 23, 24, 27) for rotating the first boom construction (30) relative to the support base through desired horizontal angles;

characterized by:

(d) an articulation member (40), comprising first and second portions (41, 42) which are relatively rotatable about an axis of relative rotation, the first portion (41) being pivotally mounted to the other end of the first boom construction (30);

(e) a second boom construction (60), one end of the second boom construction being pivotally mounted to the second portion (42) of the articulation member (40), the second boom construction having a second conveyor means (68) extending through it for transporting bulk solid material from one of its ends to the other of its ends;

(f) second actuator means (62) extending between the articulation member (40) and the second boom, construction (60) for selectively varying the relative vertical angle between the articulation member (40) and the second boom construction (60);

(g) further actuator means (45) for maintaining the axis of relative rotation defined by the articulation member (40) at a substantially fixed upright orientation relative to the support base for all angular positions assumed by the first boom construction (30) relative to the support base;

(h) second powered pivot means (50, 57, 58, 59) for rotating the second portion (42) of the articulation member (40) and the second boom construction (60) mounted thereto relative to the first portion (41) of the articulation member about said axis of relative rotation through desired horizontal angles;

whereby bulk solid material placed onto one of the conveyor means is subsequently discharged from the other conveyor means after moving through a path determined by the first and second actuator means (31, 62) and the first and second pivot means.

2. An articulated boom mechanism as in claim 1, wherein the articulation member (40) includes a hollow body, the body having an upper portion (41) defining the first portion of the articulation member and a lower portion (42) defining the second portion of the articulation member, the upper and lower portions (41, 42) of the body being connected by an annular bearing (50) therebetween, the latter defining the axis of relative rotation between said upper and lower portions, one end of the first conveyor means (67) extending into the upper portion of the body and one end of the second conveyor means (68) extending into the lower portion of the body, whereby in use bulk solid material moves on the first conveyor means toward the articulation member, falls from the one end of the first conveyor means (67) through the body onto the adjacent end of the second conveyor means (68), and then moves on the second conveyor means away from the articulation member (40).

3. An articulated boom mechanism as in claim 1 or 2, wherein the first boom construction (30) comprises a first boom member and a shaft means, the shaft means being adapted to be mounted so as to pivot around a vertical axis on the support base, and the first boom member being pivotally mounted on the shaft means so as to rotate around a horizontal axis wherein the other of the first and second parts of the annular bearing has a series of motors (57) mounted on its periphery, each motor driving a set of gear teeth (58) engaging the first gear teeth (59).

4. An articulated boom mechanism as in claim 1, 2 or 3, wherein the first boom construction (30) includes a tube of circular cross-section.

5. An articulated boom mechanism as in claim 1, 2 or 3, wherein the second boom construction (60) includes a tube of rectangular cross-section.

6. An articulated boom mechanism as in claim 3, wherein the first pivot means comprises hydraulic actuator means (22), rack means (23) and pinion means (24), and wherein a stationary portion of the hydraulic actuator means (22) is adapted to be mounted to the support base, the pinion means (24) extending along the periphery of the shaft means, and the rack means (23) being connected to a movable portion of the hydraulic actuator means (22) for engaging the pinion means (24).

7. An articulated boom mechanism as in claim 2, wherein a first part (53) of the annular bearing (50) is formed on the lower edge of the upper portion of the body and a second part (54) of the annular bearing is formed on the upper edge of the lower portion of the body, and wherein the one of the first and second parts of the annular bearing has first gear teeth (59) extending along its periphery, and wherein the other of the first and second parts of the annular bearing has a series of motors (57) mounted on its periphery, each motor driving a set of gear teeth (58) engaging the first gear teeth (59).

8. An articulated boom mechanism as in any one of claims 1 through 7, wherein the first and the further actuator means comprises a first hydraulic actuator means (31) and a second hydraulic actuator means (45) respectively, the first hydraulic actuator means (31) extending between the support base and the first boom construction (30), and the second hydraulic actuator means (45) extending between the first boom construction (3) and the articulation member (40), actuation of the first hydraulic actuator means (30) resulting in a corresponding actuation of the second hydraulic means (45) for maintaining the axis of relative rotation defined by articulation member (40) at the fixed orientation relative to the support base.

9. An articulated boom mechanism as in claim 8, wherein the second actuator means comprises a still further hydraulic actuator means (62).

10. An articulated boom mechanism as in any of claims 1—7, wherein the first and second actuator means are each comprised of hydraulic actuator means (31, 62).

11. An articulated boom mechanism as in claim 2, or as in any of the preceding claims when dependent on claim 2 further comprising a chute (72) mounted within the articulation member (40), the chute being mounted to said upper portion (41) of the body and extending generally centrally through the body, the upper end of the chute (67) being positioned under the one end of the first conveyor means (67) and the lower end of the chute (72) being positioned above the one end of the second conveyor means (68), the chute guiding bulk solid material leaving the first conveyor means onto the second conveyor means.

**Patentansprüche**

1. Schwenkarm zum Befördern von festem Schüttgut, z.B. von von einem Schiff transportierbarem Schüttgut, wobei der Schwenkarm aufweist:

(a) ein erstes Auslegerelement (30), dessen eines Ende derart ausgebildet ist, daß es schwenkbar an einem Stützlager, z.B. an einem Abschnitt eines Schiffaufbaus mittels universell ausgebildeter Verbindungsmittel festlegbar ist, wobei das erste Auslegerelement ein erstes durch das Element hindurchgehendes Beförderungsmittel (67) aufweist, um Material vom einen zum anderen Ende zu transportieren;

(b) erste Betätigungsmittel (31) die derart ausgebildet sind, daß sie sich zwischen dem Stützlager und dem ersten Auslegerelement (30) erstrecken, um selektiv den relativen vertikalen Winkel zwischen dem ersten Auslegerelement (30) und dem Stützlager zu verändern;

(c) erste angetriebene Schwenkmittel (22, 23, 24, 27) zum Drehen des ersten Auslegerelements (30) relativ zum Stützlager zum Einstellen gewünschter horizontaler Winkel;

gekennzeichnet durch

(d) ein Schwenkelement (40), das erste und zweite Abschnitte (41, 42) aufweist, die relativ um eine Rotationsachse drehbar sind, wobei der erste Abschnitt (41) schwenkbar am anderen Ende des ersten Auslegerelements (30) festgelegt ist;

(e) ein zweites Auslegerelement (60), dessen eines Ende schwenkbar am zweiten Abschnitt (42) des Schwenkelements (40) festgelegt ist, wobei das zweite Auslegerelement ein zweites durch das Element hindurchgehendes Beförderungsmittel (68) aufweist, um festes Schüttgut vom einen zum anderen Ende zu transportieren;

(f) zweite Betätigungsmittel (62), die sich zwischen dem Schwenkelement (40) und dem zweiten Auslegerelement (60) erstrecken, um selektiv den relativen vertikalen Winkel zwischen dem Schwenkelement (40) und dem zweiten Auslegerelement (60) zu verändern;

(g) weitere Betätigungsmittel (45), um die von dem Schwenkelement (40) definierte Rotationsachse in einer im wesentlichen konstanten aufrechten Ausrichtung relativ zum Stützlager für alle von dem ersten Auslegerelement (30) relativ zum Stützlager einnehmbaren Winkelstellungen zu halten;

(h) zweite angetriebene Schwenkmittel (50, 57, 58, 59) zum Drehen des zweiten Abschnittes (42) des Schwenkelements (40) und des zweiten daran festgelegten Auslegerelements (60) relativ zum ersten Abschnitt (41) des Schwenkelements um dessen Rotationsachse durch gewünschte horizontale Winkelbereiche; wobei festes Schüttgut, das einem der Beförderungsmittel aufgegeben wird, von dem anderen Beförderungsmittel weiterbefördert wird, nachdem es einen von dem ersten und zweiten Beförderungsmittel (31, 62) und ersten und zweiten Schwenkmittel bestimmten Weg durchwandert hat.

2. Schwenkarm nach Anspruch 1, dadurch gekennzeichnet, daß das Schwenkelement (40) einen hohlen Körper aufweist, daß der Körper einen oberen, den ersten Abschnitt des Schwenkelements bildenden Abschnitt (41) und einen unteren, den zweiten Abschnitt des Schwenkelements bildenden Abschnitt (42) aufweist, daß der obere und der untere Abschnitt (41, 42) des Körpers durch ein ringförmiges dazwischenliegendes Lager (50) miteinander verbunden sind, daß das Lager die Rotationsachse für die relative Drehbewegung zwischen dem oberen und dem unteren Abschnitt definiert, daß ein Ende des ersten Beförderungsmittels (67) sich in den oberen Abschnitt des Körpers und ein Ende des zweiten Beförderungsmittels (68) in den unteren Abschnitt des Körpers erstreckt, und daß im Betrieb das feste Schüttgut auf dem ersten Beförderungsmittel in Richtung des Schwenkelements bewegt wird, von dem einen Ende des ersten Beförderungsmittels (67) durch den Körper hindurch und auf das angrenzende Ende des zweiten Beförderungsmittels (68) fällt und dann auf dem zweiten Beförderungsmittel weg vom Schwenkelement (40) bewegt wird.

3. Schwenkarm nach Anspruch 1 oder 2, dadurch gekennzeichnet, daß das zweite Auslegerelement (30) ein erstes Armteil und ein Achsteil aufweist, daß das Achsteil derart ausgebildet und angeordnet ist, daß es um eine vertikale Achse am Stützlager schwenkbar ist, daß der erste Armteil schwenkbar am Achsteil festgelegt ist, so daß er um eine horizontale Achse verschwenkbar ist, wobei der andere des ersten und zweiten Teils des ringförmigen Lagers eine Anzahl von Antrieben (57) aufweist, die an der peripherie angeordnet sind, wobei jeder Antrieb einen Zahnradzahnsatz (58) antreibt, der in eine erste Verzahnung (59) eingreift.

4. Schwenkarm nach Anspruch 1, 2 oder 3, dadurch gekennzeichnet, daß das erste Auslegerelement (30) eine Röhre mit kreisförmigem Querschnitt aufweist.

5. Schwenkarm nach Anspruch 1, 2 oder 3, dadurch gekennzeichnet, daß das zweite Auslagerelement (60) eine Röhre mit rechteckförmigem Querschnitt aufweist.

6. Schwenkarm nach Anspruch 3, dadurch gekennzeichnet, daß das erste Schwenkmittel hydraulische Betätigungsmittel (22) und Zahnstangenantriebsmittel (23 und 24) aufweist, und daß das hydraulische Betätigungsmittel durch Festlegung am Stützlager eine stationäre Lage einnimmt, daß das Antriebsritzel (24) sich über den Umfang des Achsteils erstreckt und daß die Zahnstange (23) mit einem beweglichen Abschnitt des hydraulischen Betätigungsmittels (22) verbunden ist und mit dem Antriebsritzel (24) in Eingriff steht.

7. Schwenkarm nach Anspruch 2, dadurch gekennzeichnet, daß ein erster Teil (53) des ringförmigen Lagers (50) an der unteren Kante des oberen Abschnitts des Körpers und ein zweiter Teil (54) des ringförmigen Lagers an der oberen Kante des unteren Abschnitts des Körpers vorgesehen sind, daß der eine des ersten und zweiten Teils des ringförmigen Lagers eine erste Verzahnung (59) aufweist, die sich über seine Peripherie erstreckt und daß der andere des ersten und zweiten Teils des ringförmigen Lagers eine Anzahl von Antrieben (57) aufweist, die an seiner Peripherie angeordnet sind, wobei jeder Antrieb einen Zahnradzahnsatz (58) antreibt, der in die erste Verzahnung (59) eingreift.

8. Schwenkarm nach einem der Ansprüche 1 bis 7, dadurch gekennzeichnet, daß das erste und das weitere Betätigungsmittel ein erstes hydraulisches Betätigungsmittel (31) bzw. ein zweites hydraulisches Betätigungsmittel (45) aufweist, daß das erste hydraulische Betätigungsmittel (31) sich zwischen dem Stützlager und dem ersten Auslegerelement (30) erstreckt, daß das zweite hydraulische Betätigungsmittel (45) sich zwischen dem ersten Auslegerelement (30) und dem Schwenkelement (40) erstreckt, daß eine Betätigung des ersten hydraulischen Betätitungselements (31) in einer korrespondierenden Betätigung des zweiten hydraulischen Betätigungselements (45) resultiert, so daß die vom Schwenkelement (40) definierte relative Rotationsachse eine stationäre Ausrichtung relativ zum Stützlager beibehält.

9. Schwenkarm nach Anspruch 8, dadurch gekennzeichnet, daß das zweite Betätigungselement ein weiteres hydraulisches Betätigungselement (62) aufweist.

10. Schwenkarm nach einem der Ansprüche 1 bis 7, dadurch gekennzeichnet, daß das erste und zweite Betätigungselement jeweils hydraulische Betätigungselemente (31, 62) enthalten.

11. Schwenkarm nach Anspruch 2 oder einem der vorhergehenden, von Anspruch 2 abhängigen Ansprüche, dadurch gekennzeichnet, daß eine Schütte (72) vorgesehen ist, die sich innerhalb des Schwenkelements (40) befindet, daß die Schütte am oberen Abschnitt (41) des Körpers festgelegt ist und sich im wesentlichen zentral durch den Körper erstreckt, daß das obere Ende der Schütte (72) unterhalb des einen Endes des ersten Beförderungsmittels (67) positioniert ist, daß das untere Ende der Schütte (72) oberhalb des anderen Endes des zweiten Beförderungsmittels (68) positioniert ist und daß die Schütte das das erste Beförderungsmittel verlassende feste Schüttgut auf das zweite Beförderungsmittel lenkt.

## Revendications

1. Mécanisme de bras articulé destiné à être utilisé pour le transport de matière solide en vrac, telle qu'une matière solide en vrac pouvant être transportée par bateau, ce mécanisme de bras comportant:

a) une première construction de bras (30), une extrémité de la première construction de bras étant prévue pour être montée de façon pivotante sur une embase de support, telle qu'une partie d'une structure de bateau, la première construction de bras ayant des premiers moyens de transport (67) s'étendant au travers d'elle pour transporter la matière d'une de ses extrémités vers l'autre de ses extrémités;

b) des premiers moyens d'actionnement (31) prévus pour s'étendre entre l'embase de support et la première construction de bras (30) afin de modifier sélectivement l'angle vertical relatif entre la première construction de bras (30) et l'embase de support;

c) des premiers moyens de pivotement motorisés (22, 23, 24, 27) destinés à entraîner en rotation la première construction de bras (30) par rapport à l'embase de support sur des angles horizontaux désirés;

caractérisé par:

d) un élément d'articulation (40), comportant des première et seconde parties (41, 42) qui peuvent tourner l'une par rapport à l'autre autour d'un axe de rotation, la première partie (41) étant montée de façon pivotante sur l'autre extrémité de la première construction de bras (30);

e) une seconde construction de bras (60), une extrémité de la seconde construction de bras étant montée de façon pivotante sur la seconde partie (42) de l'élément d'articulation (40), la seconde construction de bras ayant des seconds moyens de transport (68) s'étendant au travers d'elle pour transporter la matière solide en vrac d'une de ses extrémités vers l'autre de ses extrémités;

f) des seconds moyens d'actionnement (62) s'étendant entre l'élément d'articulation (40) et la seconde construction de bras (60) afin de modifier sélectivement l'angle vertical relatif entre l'élément d'articulation (40) et la seconde construction de bras (60);

g) des moyens d'actionnement supplémentaires (45) destinés à maintenir l'axe de rotation relative défini par l'élément d'articulation (40) dans une orientation verticale sensiblement fixe par rapport à l'embase de support pour toutes les positions angulaires prises par la première construction de bras (30) par rapport à l'embase de support;

h) des seconds moyens de pivotement motorisés (50, 57, 58, 59) destinés à entraîner en rotation la seconde partie (42) de l'élément d'articulation (40) et la seconde construction de bras (60) montée dessus par rapport à la première partie (41) de l'élément d'articulation autour du dit axe de rotation relative sur des angles horizontaux désirés;

la matière solide en vrac placée sur l'un des moyens de transport étant déchargée ultérieurement des autres moyens de transport après déplacement sur un parcours déterminé par les premiers et seconds moyens d'actionnement (31, 62) et les premiers et seconds moyens de pivotement.

2. Mécanisme de bras articulé selon la revendication 1, dans lequel l'élément d'articulation (40) comporte un corps creux, ce corps ayant une partie supérieure (41) définissant la première partie de l'élément d'articulation, et une partie inférieure (42) définissant la seconde partie de l'élément d'articulation, les parties supérieure et inférieure (41, 42) du corps étant reliées par un palier annulaire (50) entre elles, ce dernier définissant l'axe de rotation relative entre les dites parties supérieure et inférieure, une extrémité des premiers moyens de transport (67) s'étendant dans la partie supérieure du corps et une extrémité des seconds moyens de transport (68) s'étendant dans la partie inférieure du corps, la matière solide en vrac, lors de l'utilisation, se déplaçant sur les premiers moyens de transport en direction de l'élément d'articulation, tombant d'une extrémité des premiers moyens de transport (67) au travers du corps sur l'extrémité adjacente des seconds moyens de transport (68), et se déplaçant ensuite sur les seconds moyens de transport à l'écart de l'élément d'articulation (40).

3. Mécanisme de bras articulé selon la revendication 1 ou 2, dans lequel la première construction de bras (30) comporte un premier élément de bras et des moyens formant arbre, ces moyens formant arbre étant prévus pour être montés de façon à pivoter autour d'un axe vertical sur l'embase de support, et le premier élément de bras étant monté de façon pivotante sur l'arbre afin de pouvoir tourner autour d'un axe horizontal, l'autre des première et seconde parties du palier annulaire possédant une série de moteurs (57) montés sur sa périphérie, chaque moteur entraînant un jeu de dents d'engrenage (58) engageant les premières dents d'engrenage (59).

4. Mécanisme de bras articulé selon la revendication 1, 2 ou 3, dans lequel la première construction de bras (30) comporte un tube de section circulaire.

5. Mécanisme de bras articulé selon la revendication 1, 2 ou 3, dans lequel la seconde construction de bras (60) comporte un tube de section rectangulaire.

6. Mécanisme de bras articulé selon la revendication 3, dans lequel les premiers moyens de pivotement comportent des moyens d'actionnement hydrauliques (22), des moyens formant crémaillère (23) et des moyens formant pignon (24), et dans lequel une partie fixe des moyens d'actionnement hydrauliques (22) est prévue pour être montée sur l'embase de supporte, les moyens formant pignon (24) s'étendant le long de la périphérie des moyens formant arbre, et les moyens formant crémaillère (23) étant reliés à une partie mobile des moyens d'actionnement hydrauliques (22) de facon à engager le pignon (24).

7. Mécanisme de bras articulé selon la revendication 2, dans lequel une première partie (53) du palier annulaire (50) est formée sur le bord inférieur de la partie supérieure du corps et une seconde partie (54) du palier annulaire est formée sur le bord supérieur de la partie inférieure du corps, et dans lequel l'une des première et seconde parties du palier annulaire possède des premières dents d'engrenage (59) s'étendant le long de sa périphérie, et dans lequel l'autre des première et seconde parties du palier annulaire possède une série de moteurs (57) montés sur sa périphérie, chaque moteur entraînant un jeu de dents d'engrenage (58) engageant les premières dents d'engrenage (59).

8. Mécanisme de bras articulé selon l'une quelconque des revendications 1 à 7, dans lequel les premiers moyens d'actionnement et les moyens d'actionnement supplémentaires comportent respectivement des premiers moyens d'actionnement hydrauliques (31) et des seconds moyens d'actionnement hydrauliques (45), les premiers moyens d'actionnement hydrauliques (31) s'étendant entre l'embase de support et la première construction de bras (30), et les seconds moyens d'actionnement hydrauliques (45) s'étendant entre la première construction de bras (30) et l'élément d'articulation (40), l'actionnement des premiers moyens d'actionnement hydrauliques (31) ayant pour résultat un actionnement correspondant des seconds moyens hydrauliques (45) de façon à maintenir l'axe de rotation relative défini par l'élément d'articulation (40) sur l'orientation fixe par rapport à l'embase de support.

9. Mécanisme de bras articulé selon la revendication 8, dans lequel les seconds moyens d'actionnement comportent des moyens d'actionnement hydrauliques supplémentaires (62).

10. Mécanisme de bras articulé selon l'une quelconque des revendications 1 à 7, dans lequel les premiers et seconds moyens d'actionnement se composent chacun de moyens d'actionnement hydrauliques (31, 62).

11. Mécanisme de bras articulé selon a revendication 2, ou selon l'une quelconque des revendications précédentes rattachée à la revendication 2, comportant en outre une goulotte (72) montée à l'intérieur de l'élément d'articulation (40), la goulotte étant montée sur la dite partie supérieure (41) du corps et s'étendant d'une manière générale centrale au travers du corps, l'extrémité supérieure de la goulotte (72) étant positionnée sous l'extrémité des premiers moyens de transport (67) et l'extrémité inférieure de la goulotte (72) étant positionnée au dessus d'une extrémité des seconds moyens de transport (68), la goulotte guidant sur les seconds moyens de transport la matière solide en vrac quittant les premiers moyens de transport.

FIG. 1

FIG. 2

FIG. 4

FIG. 3

3

FIG.  5

FIG. 6

FIG. 7

FIG. 8